Europäisches Patentamt

European Patent Office

Office européen des brevets

(11) Publication number: **0 116 453**
**B1**

## EUROPEAN PATENT SPECIFICATION

(45) Date of publication of patent specification: **03.01.90**

(51) Int. Cl.⁵: **B 29 D 3/02, F 02 K 9/34**

(21) Application number: **84300721.2**

(22) Date of filing: **06.02.84**

(54) Process for lining composite rocket motor cases.

(30) Priority: **07.02.83 US 464539**

(43) Date of publication of application:
**22.08.84 Bulletin 84/34**

(45) Publication of the grant of the patent:
**03.01.90 Bulletin 90/01**

(84) Designated Contracting States:
**BE CH DE FR GB IT LI**

(56) References cited:
**EP-A-0 094 805**
**FR-A-1 567 493**
**FR-A-2 098 934**
**FR-A-2 136 979**
**FR-A-2 366 455**
**GB-A-1 072 420**
**US-A-2 718 583**
**US-A-3 303 079**

(73) Proprietor: **HERCULES INCORPORATED**
**Hercules Plaza**
**Wilmington Delaware 19894 (US)**

(72) Inventor: **Taylor, Timothy Terrance**
**712 Camelot Way**
**West Jordan Utah 84084 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

Courier Press, Leamington Spa, England.

# EP 0 116 453 B1

**Description**

This invention relates to composite rocket motor cases that have a filament wound shell lined with elastomer. This invention, more specifically, relates to fabricating elastomer lined rocket motor cases by a method which includes making the liner by extruding an elastomeric ribbon and causing it to wind and tack together around a rocket motor case mandrel.

The elastomeric liner of a composite rocket motor case performs two major functions. First, it thermally insulates the case from burning propellant; second, it seals the case from leakage of propellant gases. For large rocket motors using composite cases, two present methods of insulator manufacture are (1) the molding of green rubber stock in matched metal dies and (2) the hand layup of green rubber sheets followed by vulcanization and grinding to final dimensions. In either circumstance, insulators are next positioned on case winding mandrels (or alternately within a preformed case) where various splicing, hand buffing, bonding and shrinking operations are performed. These methods of fabrication are disadvantageous in view of: a) large facility investments, b) extensive precision tooling, c) long lead times for production that give rise to an inability to accommodate design changes quickly and cheaply; d) failure modes such as insulator to case unbonding being introduced because of hand and bonding operations, and e) labor intensive unit costs.

U.S. Patent 3,303,079 relates to preparation of elastomer lined rocket motor cases. This patent proposes laying calendared sheets of rubber on a mandrel to produce a curable precursor to the liner. The curable layer of rubber is encased in a curable filament wound shell; the rubber and shell are cured together in providing the elastomer lined composite vessel. Laying calendared sheets manually about a mandrel, however, is labor intensive; and it is especially difficult when building thickness with more than two sheets of the elastomer and when covering contoured portions of the mandrel with precise, but variable thicknesses.

Broadly speaking, GB—A—1,072,420 also discloses the making of a rocket motor case by a method which comprises forming a layer of elastomer on a mandrel having a centre rotational axis; applying a shell comprising filaments and thermosetting resin to said layer of elastomer, and curing the thermosetting resin to provide the case (see the preamble of claim 1 hereinafter). The elastomer may be laid as sections of uncured neoprene, which is then cured before the filaments, in particular resin-coated glass filaments, are wound on. This prior document is primarily concerned with reducing shear stresses in the resin in the head portion of the casing by means of a particular configuration of head portion and by orienting the filaments in the meridian direction rather than the hoop direction.

GB—A—1,176,349 discloses that a rocket motor case may be provided with a liner comprising a cured elastomer that is a terpolymer of ethylene, propylene and a non-conjugated diene, in particular dicyclopentadiene or cyclooctadiene, and an inert filler.

EP—A—0,094,805 (which was published on 23 November 1983 in respect of a European patent application filed on 13 May 1983 with a declared priority date of 17 May 1982 and designating France, Germany (Federal Republic), Italy and the United Kingdom, and which is therefore part of the state of the art only in accordance with Article 54(3) EPC in respect of those countries) discloses a method of making an elastomer lined composite vessel, in particular a rocket motor case, or portion of said composite vessel, which method comprises the steps of: causing a thin, tacky ribbon comprising a curable elastomer to continuously so encircle a center rotational axis of a mandrel as to adjacently position and tack together integral segments of said ribbon substantially circumferentially relative to said center axis forming a layer of said elastomer comprising a plurality of said segments layed on each other in precise fashion about said mandrel along said center rotational axis; applying a shell comprising filaments and thermosettable resin to said layer, cured or uncured, of said elastomer; and curing said thermosettable resin to provide said vessel or portion of said vessel.

The present invention relates to an improvement of that method (which itself may be regarded as being of the broad type disclosed in US—A—3,303,079 and GB—A—1,072,420) and in particular provides a method of making a rocket motor case or portion thereof characterised by (a) selecting for said curable elastomer a silica filled, crosslinkable EPDM elastomer containing (i) a plasticizer consisting essentially of unsaturated plasticizing oil that is liquid at 25°C and selected from compounds having two or more carbon-carbon double bonds and (ii) peroxide curative wherein there are between 2 and 30 parts by weight of said plasticizing oil per hundred parts by weight of crosslinkable elastomer polymer or polymers, said silica filled elastomer polymer having a Mooney Viscosity between 10 and 65 (100°C (212°F) ML-4), (b) extruding said silica filled, crosslinkable EPDM elastomer to provide an extruded ribbon product having a temperature in the range between 32.2°C (90°F) and 85°C (185°F), (c) applying said extruded ribbon product to said mandrel at a temperature in the range between 26.7°C (80°F) and 65.6°C (150°F), thereby assisting in precisely tacking together said integral segments layed upon each other and (d) curing said extruded ribbon product applied to said mandrel at a temperature in the range between 93.3°C (200°F) and 204.4°C (400°F) to yield the elastomer liner having a density of between 1.0 and 1.2 grams per cubic centimeter.

By using a peroxide-curable elastomer, the invention overcomes a problem with the sulfur-cured liners used in practice hitherto, where the sulfur could interfere with the curing of the filament wound cases. Furthermore, the use of the peroxide-curable elastomer containing an unsaturated plasticizing oil enables the stock to be extruded into a thin ribbon strip which can be readily applied to the rotating mandrel; the

2

rubber stock previously used in making the liners in accordance with the pre-published art did not have the proper Mooney viscosity to be extruded and laid as a ribbon on a mandrel.

A continuous layer of elastomer is formed from laying the ribbon on the mandrel in the aforementioned manner. In a first embodiment, the layer comprises crosslinkable elastomer which is then encased in filamentary materials in a thermosettable resin matrix by filament winding; the filamentary materials can carry the thermosettable resin as they lay upon this layer of elastomer or can be impregnated thereafter. The thermosettable resin is then preferably partially cured. The curable elastomer and partially cured resin then are cured together in a thermal oven or by microwave. In a second embodiment, the layer of elastomer is cured prior to application of the filamentary materials. In this second embodiment, a ribbon of crosslinkable elastomer is similarly layed on the mandrel but then cured in an autoclave, or more preferably, first overwrapped or encased with sacrificial material which is removed after curing of the elastomer in an oven or by microwave. The sacrificial material can be release tape, dry fiber, shrink tape or a combination thereof.

Accordingly, in practice of either the first or second embodiments, this invention comprises preparing an elastomer lined composite rocket motor case by steps including: extruding a thin ribbon comprising a filled, crosslinkable elastomer containing unsaturated plasticizing oil and peroxide curative, the ribbon adapted or adaptable to adhere to itself; providing an applicator for applying the ribbon to a mandrel having a center axis of rotation, the mandrel configured to a shape for making a liner for the rocket motor case or portion thereof; fixing the ribbon to the mandrel on a first surface portion thereof; causing relative rotation between the mandrel and the applicator about the center axis while issuing the ribbon to the applicator at a rate sufficient for applying the ribbon to the mandrel substantially circumferentially about such center axis starting from a first surface portion of the mandrel; continuing together the relative rotation about the center axis while translating the applicator relative to the center axis to lay substantially circumferentially disposed segments of the ribbon adjacently about the mandrel that adhere together in forming a layer of the crosslinkable elastomer that covers the mandrel; and curing the layer of elastomer to provide the liner for the case or portion of the case. The curing of the elastomer is preferably in accordance with the first embodiment and thus in the presence of a shell comprising continuous filaments and thermosettable resin where the filaments have been wound about the layer of crosslinkable elastomer. The resin is preferably partially cured or B-staged in this first embodiment prior to final cure of the resin and elastomer; also, the filaments are preferably chosen to have a lower coefficient of thermal expansion than the mandrel material. The ribbon has temperatures in ranges between about 90 and 185°F (32.2 and 85°C) as it extrudes from the extruder, between 80° and 150°F (26.7 and 65.6°C) as it is applied to the mandrel and between 200° and 400°F (93.3 and 204.4°C) as it is cured.

In making these rocket motor cases, the mandrel shape can include a dome-like shape; an uncured or cured elastomer ring can be positioned at the apex of the dome like mandrel and used as the aforementioned starting surface portion of the mandrel.

The crosslinkable elastomer containing unsaturated plasticizing oil and peroxy curative is filled with appropriate amounts of silica filler to provide liners with density and char rate advantages.

Figure 1 schematically depicts in perspective an apparatus useful in practicing this invention.

Figure 2 is a schematic view, partly broken away and partly in a cross section, of a precursor to a rocket motor case liner from forward to aft ends. The precursor lies on the mandrel that formed it. The precursor is resultant from using the apparatus of Figure 1.

Figure 3 schematically depicts a portion of the liner of Figure 2 in cross section in order to illustrate the pattern in which the ribbon is layed in forming the liner.

Figure 4 depicts schematically positioning of an elastomeric ribbon applicator device applying ribbon to a dome-shaped mandrel section using this invention.

Figure 5 is a view of an applicator device applying a ribbon of elastomer to another portion of the dome section of the mandrel used in making a rocket motor case.

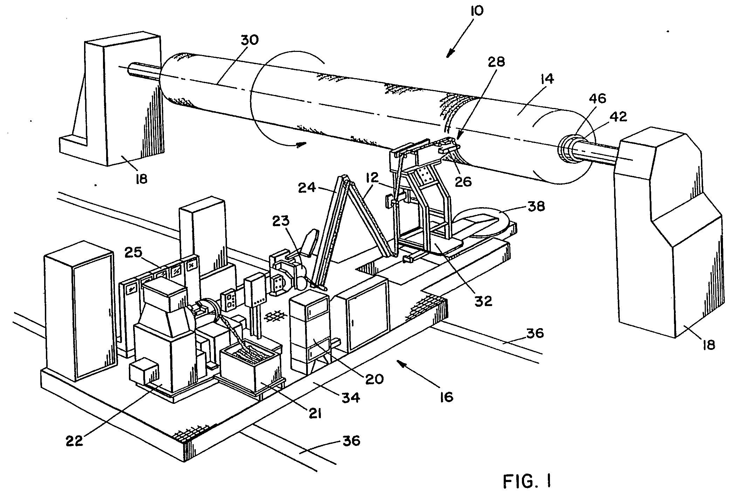

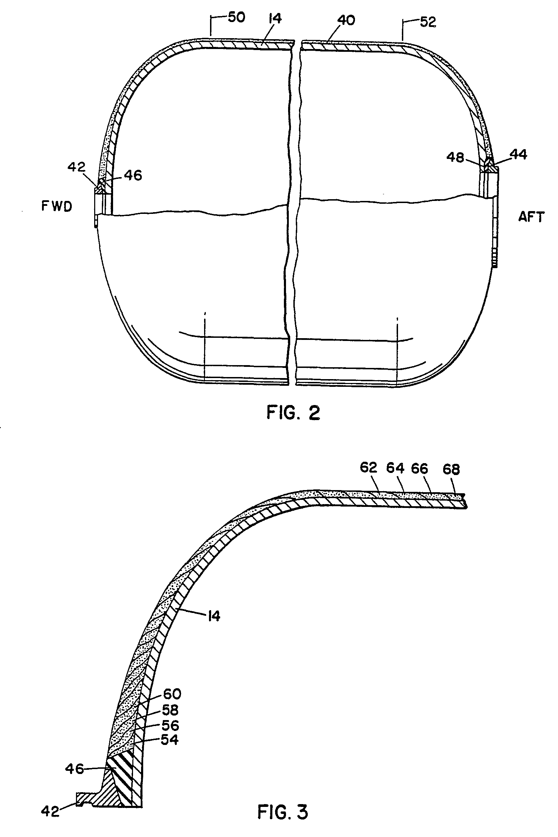

Apparatus 10 depicted in Figure 1 preferably is used for fabricating the elastomeric liner of a rocket motor case in a practice of either of the first and second embodiments of this invention. Apparatus 10 provides continuous tacky ribbon 12. Ribbon 12 comprises a filled, crosslinkable elastomer containing unsaturated plasticizing oil and peroxide curative. Ribbon 12 becomes the crosslinkable elastomer layer precursor to this liner on mandrel 14. Figures 2, 3, 4 and 5 further depict operation and results from this operation of apparatus 10.

In general, apparatus 10 serves to present elastomeric ribbon 12 and form it into the precursor to the liner. The presenting function is carried out by ribbon issuing and applying device 16. The forming function is carried out by ribbon receiving and shaping device 18. Control device 20 coordinates transit of ribbon 12 between devices 16, 18. This coordination is accomplished by properly matching the rate ribbon 12 is produced with the rate ribbon is applied to mandrel 14. In addition, control device 20 orients ribbon 12 to mandrel 14 by controlling position of ribbon 12 as it is applied to mandrel 14. Control device 20 carries out these coordination and orientation features substantially automatically after initial set up.

Ribbon issuing and applying device 16 comprises extruder 22 which extrudes ribbon 12 comprising crosslinkable elastomer as aforementioned from elastomer supply stock 21. The temperature of the ribbon 12 as it extrudes is between about 90°F and 185°F (32.2 and 85°C). Ribbon 12 proceeds through feed line 24 to applicator head 26 which carries applicator roller system 28. Applicator head 26 applies oriented ribbon 12 to mandrel 14 which rotates about mandrel axis 30 during such application. Variations of this latter rate can control ribbon thickness. The temperature of ribbon 12 as it is applied to mandrel 14 is between about 80°F and 150°F (26.7 and 65.6°C). Temperature of ribbon 12 is controlled by a temperature control unit 25 which maintains and controls temperatures in extruder 22 and the forming dies 23 thereof.

Ribbon 12 issues from extruder 22 at a rate of between about 50 feet (15.24 m)/minute and 250 feet (76.2 m)/minute, normally approximately the same rate it is applied to mandrel 14. However, the mandrel 14 can be caused, if desired, to rotate at a rate that calls for more ribbon than is being issued from extruder 22. In such a case, ribbon 12 is stretched and applied with a thinner cross section than its extruded cross section. Applying thinner cross-section ribbon has the advantage better thickness control and lower minimum thicknesses.

Applicator head 26 is carried on applicator head platform 32 which, in turn, is carried on translator platform 34. Translator platform 34 ride on guide rails 36 and moves along the guide rails 36 parallel to mandrel axis 30 in response to an actuator means (not shown).

Applicator head 26 is translatable in an arc through rotation of applicator platform 32 in grooves (not shown) under wheel 38. Also, applicator roller system 28 of applicator head 26 is translatable by means of an air loaded piston (not shown) in the applicator head 26. The air loaded piston responds to pressure exerted as a result of the contours of mandrel 14 sensed during movement along the aforementioned arc when the domes of the mandrel are being covered by elastomer.

Ribbon issuing and applying device 16 is an adaptation of the Model 601 Orbitread$^R$ New Tire System which is commercially available from AMF Corporation Santa Ana, Ca. 92704. The Model 601 system includes the applicator head 26 and applicator head platform 32, the extruder 22, the AMF HIPAC system 23 for forming ribbon 12 in a precise manner, temperature control unit 25 and control 20, including AMF's Spin Sync Electronic System, for synchronization of devices 18, 22, 23, 26, 32 and 34. The translator platform 34 is an adaption from both the basic filament winding process used in producing composite cases as practiced by Hercules Incorporated and from AMF's Roll Covering Machine (e.g. Series 2000). The former device provides for three axes of applicator head adjustment, viz. parallel and perpendicular to mandrel axis 30 and also in an arc parallel to the dome surfaces of the mandrel. The latter device provides only for the first two of these adjustments. Ribbon receiving and shaping device 18 comprises a mandrel rotating device used in winding fiber composite cases with necessary modifications to provide synchronous coupling with the requirements of device 16. The motor which turns mandrel 14 about · mandrel axis 30 is controlled by control system 20 of device 16. Device 18 may also be considered as a modification of AMF Incorporated Spin Station used in rotating a tire carcass and commercially available with the AMF Orbitread$^R$ systems such as Models 510 and 601.

The adaptations of devices 16 (including 34) and 18 include means in a single device for precisely forming and applying tacky ribbon to a mandrel such as is used in building pressure vessels (e.g., rocket motor cases) in a wide range of diametral sizes and lengths and further of forming such ribbon in variable thickness with minimum thickness, e.g. 0.040 inch (1.02 mm).

Exemplary disclosures in connection with mechanical linkages and electrical control and monitoring thereof suited for devices 16, 18 are in U.S. Patents 3,843,482; 3,901,756; 4,062,716; 4,155,789 and 4,206,009, which are hereby incorporated herein for such disclosures. Still other disclosures are in trade brochures entitled "Orbtread 510 and 520 OTR Retreading Systems", copyright 1977 by AMF, "AMF Tire Equipment HIPAC System", copyright 1978 by AMF, "AMF New Tire Systems" copyright 1978 by AMF, AMF Spin Syn$^R$ Electronic System, copyright 1979 by AMF and "AMF Roll Covering Machine", copyright 1974 by AMF of 3705 Sunflower Avenue, Santa Ana, California 97204.

Figure 2 is a view of mandrel 14 carrying elastomer layer 40, both partly in section, that has been deposited on the surface of mandrel 14 by practice of this invention. Elastomer layer 40 is the crosslinkable elastomer precursor layer to a liner of this invention. The section is partly taken through mandrel 14 and elastomer layer 40 along a line parallel to mandrel axis 30. Figure 3 further details cross-sections of the tacked ribbon segments making up elastomer layer 40, the ribbon cross section being somewhat enlarged for illustration.

Elastomer layer 40 in Figure 2 extends continuously from forward reinforcing metal ring 42 to aft reinforcing metal ring 44. Forward and aft reinforcing rings 42, 44 are metal such as aluminum but can be made of any suitable material. Forward and aft reinforcing rings 42, 44 contain, respectively, forward and aft premolded elastomer adaptors 46, 48. Bolts or other fastening of these metal rings 42, 44 attach them to their respective end of mandrel 14.

Elastomer layer 40 has a thickness which varies between forward and aft reinforcing metal rings 42, 44, as can be seen in viewing Figure 3. The thickness varies from between about one (1) inch (25.4 mm) at the premolded elastomer adaptors 46, 48 to about 0.040 inch (1.016 mm) starting at tangent lines 50, 52 of mandrel 14, or at some location generally between tangent lines 50, 52 (Fig. 2).

Mandrel 14 has a thin coating of Teflon release material that has been applied prior to applying elastomer layer 40. This Teflon release material has been coated with a light coating of adhesive such as Longmile Orbibond$^R$ elastomer adhesive material. In alternative practice, mandrel 14 can have a roughened surface that frictionally grips ribbon 12 (Figure 1) as it lays upon mandrel 14. The roughened surface typically has, however, a coating of standard release agent.

In applying elastomer layer 40 to mandrel 14, a typical procedure is to begin at either of forward or aft elastomer adaptors 46, 48 and to continue depositing ribbon 12 on either dome portions of mandrel 14 associated therewith. The other dome shape is then covered with ribbon 12 starting at the other elastomer adaptor. Then the substantially cylindrical section of mandrel 14 between forward and aft tangent lines 50, 52 is covered with elastomer; this substantially cylindrical section, however, can be covered in whole or part with elastomer prior to covering either of the domes.

In covering a dome of mandrel 14 with ribbon 12, the ribbon 12 is first adhesively bonded to the elastomer adaptor thereof. (Either or both of the elastomer adaptors 46, 48 may comprise cured or uncured elastomer. When these elastomer adaptors 46, 48 are of cured elastomer, bond to the ribbon 12 is assured by use of an elastomer adhesive material such as ChemLok$^R$ from Hughson Chemicals). Mandrel 14 is then rotated as more ribbon is issued and layed about the apex of the dome adjacent this elastomer adaptor.

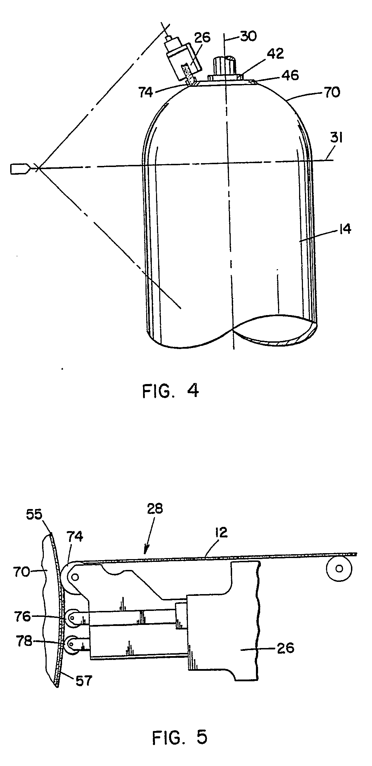

Figure 3 depicts the manner ribbon 12 has been layed on the dome and on substantially cylindrical sections of mandrel 14 by showing a cross section of the resulting tacked segments thereof. Ribbon segments 54, 56, 58, 60 etc. lay substantially edgewise against mandrel 14. Ribbon segments 62, 64, 66, 68 etc. lay substantially flat against mandrel 14. The transition of the ribbon from laying substantially edge-wise on the dome shape to substantially flat on the cylindrical section can be gradual as can be seen from Figure 3. Applicator head 26 (Figure 1) provides this orientation of segments 54, 56, 58, 60, 62, 64, 66 and 68 etc. to mandrel 14 as is discussed further in connection with Figures 4 and 5.

Figure 4 schematically depicts a portion of apparatus 10 (Figure 1) as it is used in applying ribbon 12 to dome section 70 of mandrel 14. Figure 5 shows in a view of application roller system 28 (see, also, Figure 1) as the rollers thereof apply ribbon 12 to a portion of this dome section.

Application head 26 of apparatus 10 in Figure 4 can range between angles as much as ±66° on either side of line 31 (which is perpendicular to axis 30) in applying ribbon 12 to the dome sections of mandrel 14. Application roller 74 (of application roller system 28) is first positioned next to the apex of dome section 70 in applying ribbon 12 thereto as shown in Figure 4. The application of ribbon 12 to dome section 70 thus begins adjacent forward elastomer ring 46 on forward reinforcing ring 42.

Mandrel 14 continues to rotate about mandrel axis 30 as ribbon 12 is fed to applicator head 26 and applied to dome section 70 depicted in Figure 4. Applicator head 26 translates in an arc about dome section 70 in applying ribbon 12 substantially circumferentially about mandrel axis 30 on this portion of mandrel 14 in continuous fashion. Each segment of ribbon 12 encircling mandrel axis 30 lays on or adjacent the preceding segment and thus tacks with the next adjacent segment of ribbon 12 encircling mandrel axis 30 and laying on mandrel 14. Air loading of applicator roller system 28 assists proper presentation of ribbon 12 to mandrel 14.

Ribbon 12 has a rhomboid or other such cross-section such that adjacently layed segments have mating edges that can tack together substantially circumferentially about the mandrel axis 30, as depicted in Figure 3. After or prior to laying ribbon 12 on dome section 70, ribbon 12 is layed around the substantially cylindrical section of mandrel 14. During this latter operation, head 26 of device 16 translates automatically along guide rails 36 (Figure 1).

Figure 5 is a view in elevation of the application a portion elastomer layer 40 to dome section 70 of Figure 4.

The applicator roller system 28 of Figure 5 comprises orientation roller 74 and stitcher rollers 76, 78. Orientation roller 74 urges ribbon 12 against mandrel dome 70 and stitcher rollers 76, 78 follow this application with pressure against the newly layed ribbon in a manner so as to reject entrapped air. This pressure tacks the newly layed ribbon, e.g. 57 to the previously layed ribbon segment, e.g. 55 substantially circumferentially around the center axis of dome 70 of the mandrel 14.

The ribbon as applied to a mandrel in practicing this invention is, as mentioned, tacky and comprises crosslinkable elastomer. The following provides an outline of properties that are desirable in a preferred elastomer stock in practice of this invention:

1. Acceptable green strength so as to withstand application stresses;
2. Mooney viscosity typically between about 10 and 65 at 100°C.;
3. Extrudable without significant edge feathering;
4. Non-scorching during extrusion;
5. Sustainable tack;
6. Cure essentially void free preferably at low pressures and at temperatures below which damage may occur to the elastomer rings or to the curing composite shell, if employed. (e.g. preferred temperatures are between about 250°F. and 310°F. (121.1 and 154.4°C); pressures between about 20 psig and 50 psig (137.9 and 344.7 kPa gauge).
7. Presence of unsaturated plasticizing oils that enter into the crosslinked elastomer network upon cure.

The preferred compositions of the filled, crosslinkable elastomer containing unsaturated plasticizing oil and peroxy curative in accordance with this invention are as follows in Table A:

TABLE A

| Ingredient | Parts by weight | |
| --- | --- | --- |
| | Preferred | Most desirable |
| Crosslinkable elastomer polymer | 100 | 100 |
| Supplemental elastomer polymer | 0—40 | 5—25 |
| Filler | 20—150 | 30—80 |
| Flame retardants | 0—80 | 0—60 |
| Reactive unsaturated plasticizing oil | 2—30 | 5—25 |
| Peroxide curative | 1—20 | 2—15 |
| Processing aids | 0.5—10 | 1—10 |

The polymer is cross-linkable by a peroxide curative. The preferred crosslinkable elastomer polymer is a synthetic elastomer polymer of ethylene propylene diene monomer (EPDM) which is commercially available. Specific suitable EPDM polymers are available as Nordel 1040 from DuPont, Royalene 100 from Uniroyal, Epsyn 4506 from Copolymer and Vistalon 2504 from Exxon. Other crosslinkable elastomer polymers useful in place of the EPDM, in part, include natural rubber, urethane rubber, styrene-butadiene rubber and silicone rubber.

Preferred EPDM polymers have the following properties:

| | |
| --- | --- |
| Density, g/cm³ | - 0.85 to 0.865 |
| Mooney, ML-4 at 212°F (100°C) | 25—40 |
| Brittle point, °C | −90 |
| Tensile strength (gum stock), psi | 50—150 (344.7—1034.2 kPa) |

The supplemental elastomer polymer is optional but can be included in the filled, crosslinkable synthetic elastomer compositions of this invention for the purpose of improving processing during compounding, extrusion and layup. These supplemental elastomers are characterized by a molecular weight lower than the aforedescribed elastomer polymer up to about the same molecular weight. Exemplary supplemental elastomer polymers are polychloroprene, nitrile rubber and styrene-butadiene rubbers. Depending on the properties sought for the cured liner, the supplemental elastomer may or may not be crosslinked during cure of the liner.

A filler to be included in the filled, crosslinkable elastomer compositions of this invention in silica. Other fillers which can be used together with the silica include clay, antimony oxide, and halogenated hydrocarbon flame retardants.

Crosslinkable elastomers containing unsaturated plasticizing oils and peroxy curative are filled in accordance with this invention so that the cured elastomer liner has density between about 1.0 and 1.2 gm/cm³ at 25°C.

The use of flame retardants has been found advantageous in certain embodiments of this invention. The advantage provided by these flame retardants is low char rate. Suitable flame retardants include chlorinated waxes and antimony trioxide. Other materials which can be used as flame retarding ingredients include zinc borate, brominated resins, and chopped fiber such as graphite, cotton and polyaramide pulp.

The unsaturated plasticizing oils useful in this invention first serve to aid processing of the ribbon 12 and during cure enter into the crosslinked network of the crosslinked elastomer polymer so that they cannot be leached or otherwise extracted by the propellants carried in the rocket motor. The result of using the unsaturated plasticizing oils is that the elastomeric ribbon (uncured) has the following properties:

TABLE B

| Tensile strength | 30—150 psi (206.8—1034.2 kPa) |
|---|---|
| % Elongation | Greater than 50% |
| Mooney Viscosity (212°F (100°C) ML-4) | 25—45 |
| Minimum torque Monsanto Rheometer 290°F (143°C) | 8—11 |

The unsaturated plasticizing oils of this invention are liquid at 25°C and contain two or more unsaturated carbon carbon bonds. Examples of the unsaturated plasticizing oils include trimethylol propane trimethacrylate, polyethylene glycol dimethacrylate, triallyl trimelletate, triallyl cyanurate, and unsaturated esters. These unsaturated plasticizing oils have molecular weights (number average) preferably between about 250 and 350. In addition, higher molecular weight unsaturated plasticizing oils such as polybutadienes having molecular weights (number average) between about 1500 and 3000 can be used alone or together with the lower molecular weight oils.

The unsaturated plasticizing oil is used at weight ratio relative to the elastomer polymer or polymers in the filled crosslinkable elastomers of this invention of between about 2 and 30, more preferably 5 and 25 phr whereas phr is parts by weight per hundred parts by weight of the elastomer polymer.

The peroxy curative suitable for incorporation into the filled crosslinkable elastomer compositions of this invention includes any peroxide compound which upon heat yields free radicals. Examples of the peroxy curative include dicumyl peroxide, t-butyl peroxy compounds such as 2,5 - dimethyl - 2, - 5 - di(t - butyl peroxy)hexane. Other examples are 1,1 - di(t - butyl - peroxy)3,3,5 - trimethylcyclohexane; t - butyl - peroxy - 2 - ethyl - hexaneoate; t - butylperoxybenzoate; 2,5 - dimethyl - 2,5 - di - (benzoyl-peroxy)hexane; t - butylperoxymaleic acid; dicumyl peroxide; and di - t - butylperoxide.

A variety of processing aids can be included in the filled, crosslinkable synthetic elastomer compositions of this invention. For example, stearic acid, natural and synthetic waxes, amine antioxidants for retarding the peroxide cure and the like can be included. The aforementioned ingredients are preferably compounded as follows prior to extruding ribbon; by mixing in a Banbury mixer (1) the elastomer, (2) filler, (3) reactive oils and processors until it reaches 250—260°F (121.1—126.7°C). The batch is removed from the mixer, cooled and mixed again adding the curatives (peroxide).

The tack of the elastomer is preferably inherent in the elastomer but may be accomplished through addition of a tackifier to the elastomer formulation providing the ribbon. In addition, or even in absence of such a tackifier, heat may be used to provide or enhance tack of the ribbon elastomer as it is being processed during its application by a temperature control unit or other means such as a heat tunnel positioned between the applicator and ribbon producing apparatus. Moreover, adhesive may be applied to the surface of the ribbon to provide or enhance its tack.

Tacking between adjacent segments is enhanced through the geometry of segments of the ribbon layed side by side. Such geometry includes rhomboid configurations. This tacking is further increased by mechanically urging the segments together through what is termed stitcher rollers 76, 78 of Figure 5.

The ribbon of this invention may vary in thickness, cross-sectional geometry and width. Generally, extruded ribbons having a constant thickness between about 0.025 and 0.050 inches (0.635—1.27 mm) are preferred. The width is preferably between about 0.5 and 2 inches (1.27—5.08 cm) and may vary depending on the size of the mandrel as well as the configuration thereof where it is layed.

Any of the materials e.g. steel, aluminum, plaster commonly used to make mandrels in the prior art can be used as mandrels for this invention. Preferably, however, for the first and second embodiments, the mandrel material is selected to have a higher coefficient of thermal expansion by a factor of over above 1.5 and more preferably two or more than that of the filaments used in winding filamentary reinforcement of the fiber and resin shell. The mandrel may be heated from the inside to provide, however, greater expansion of the mandrel than the filaments during cure of the elastomer.

After completing the application of the ribbon to the mandrel so as to form an elastomer layer about the mandrel, the ribbon is preferably stabilized by winding a tow of continuous filaments about the layer in a helical fashion. This tow of helically disposed fibers is normally removed during, or prior to, application of the filaments making up reinforcement of the fiber and resin shell.

Filaments are wound about the mandrel on the elastomer layer to provide reinforcement for the composite shell of the vessel. The filaments can be wound as resin impregnated with resin filaments or impregnated after their deposition on the elastomer layer.

Present preferred practice is to cure the crosslinkable elastomer after deposition of the shell comprising filaments and thermosettable resin. This thermosettable resin is partially cured (e.g. B-staged) prior to cure of the curable elastomer.

Any of the usual thermosettable resins can be used in fabricating the composite shell of the pressure vessel in the latter practice or other practices of this invention. Examples of such resins are epoxy and vinyl resins. Preferred resins include those that may be B-staged at relatively low temperatures, e.g. between

7

about 100—200°F (38—93°C). An example of a suitable commercially available resin is a resin comprising a diglycidyl ether of bisphenol A with an aromatic amine curing agent, available from Dow Chemical Co.

The partially cured resin forms a matrix for the filaments wound about the mandrel. The crosslinkable elastomer and partially hardened resin can be cured together in forming the elastomer lined vessel. Curing of the resin and elastomer can be by microwave or in an oven at temperature preferably between about 200—400°F (93.3—204.4°C). The cure of the elastomer is contained between the mandrel and the shell of filaments and thermosettable resin then also undergoing cure. The pressure developed between the shell of filaments and the mandrel replace the need for press or autoclave cure and help integrate the elastomer and cured composite shell in the finished elastomer lined composite rocket motor case.

The following examples illustrate aspects of this invention in a more specific manner. The practices illustrated in the examples are not meant to limit this invention, but, rather, detail means for its particular application.

Example 1

The following describes a practice of this invention using a 30 in. (76.2 cm) diameter steel, Teflon coated rocket motor case mandrel and an apparatus such as apparatus 10 depicted in Figure 1.

Premilled uncured elastomeric stock formed into suitable physical dimension was fed to a 3-1/2 inch (8.9 cm) diameter extruder. The extrudate was passed through a die unit and formed into a thin ribbon about one inch (2.54 cm) wide by 0.07 in. (1.78 mm) thick. The ribbon was applied to the rotating surface of the mandrel, such that the linear speed of the mandrel at the point of application was matched to the linear speed of the ribbon at the die system exit. The ribbon was first layed on the premolded adaptor at the apex of a first dome of the mandrel, then it was continued about this dome. Applied thickness at any point was controlled by varying such parameters as ribbon spacing (turns/unit length), ribbon tension, ribbon thickness, rate of linear speed of the mandrel at the point of application to the linear speed of the ribbon at exit from the die system and angle of the ribbon to the surface of the mandrel. The above was accomplished using a conventional tire building machine (model 1901) produced by AMF Incorporated.

The extrudate temperature was controlled to enhance tack of the elastomeric ribbon. The uncured ribbon was held in place by adhesive tack between the ribbon and the starting surface, the ribbon and the contact cement or the ribbon to ribbon surfaces.

At the end of application an elastomeric liner, uncured except for the starting surface, and near design thickness dimensions, was present on the mandrel. To evaluate different formulations a different material was used for each dome. The mandrel was removed from the strip winding machinery. (Because of size limitations this work was done using two halves which were later combined into a single case mandrel). The uncured elastomer was stabilized on the mandrel by winding with a single tow of Kevlar fiber in a helical pattern spaced about 10 to 15 inches (25.4—38.1 cm) between wraps. This was later removed.

The mandrel covered with the uncured dimensionally controlled liner precursor was placed on a conventional filament winding machine and a vessel fabricated using Kevlar fiber and the epoxy case winding resin Hercules Incorporated Formulation 55A. The Kevlar fiber was in the form of continuous filaments which were wound in circumferential and helical plies about the uncured liner precursor.

The assembled unit was placed in a thermal oven and given rotational (oscillatory) motion about the center axis. The oven temperature was raised to 160°F (71.1°C) and held for two hours. This "B-staged" the resin so that it would not flow from the fiber material and a pressure vessel was formed of the case. No significant cure of the liner material occured during this step.

To complete the case resin cure and simultaneously to cure the liner elastomeric material, the oven temperature was raised to 310°F (154.4°C) and held for four hours. Then the unit was cooled to room temperature.

During the cure cycle the following pressures (Table I) were indicated by a miniature pressure transducer installed each between one of the steel domes of the mandrel and the uncured liner precursor.

TABLE I

| Condition | Pressure Psig (kPa) |
|---|---|
| Case as wound, uncured case and insulator | 48 (330.9) |
| End of cure at 310°F. (154.4°C) | 63 (434.4) |
| After cure and during cool down as oven temperature passed thru 120°F. (48.9°C) | 10 (68.9) |

Examination of the sectioned case revealed the liner to be well consolidated with hardness typically that of similar material cured in a press at over 100 psi (689.5 kPa).

The following tabulation (Table II) compares the liner thickness dimensions as measured for the cured, and uncured stocks with the design requirement.

8

TABLE II

| Stock | Measurement station | Design thickness, inch (mm) | Thickness, inch (mm), as applied uncured stock | Thickness, inch (mm), after cure |
|---|---|---|---|---|
| | | | | at 45° Azimuth[b] |
| No. 71 | 4 | .550 (13.97) | [a] | .564 (14.32) |
| | 5 | .390 (9.9) | .392 (9.9) | .361 (9.2) |
| | 6 | .229 (5.8) | .209 (5.3) | .231 (5.9) |
| | 7 | .155 (3.9) | .193 (4.9) | .165 (4.2) |
| | 8 | .144 (3.7) | .142 (3.6) | .128 (3.2) |
| | 9 | .098 (2.5) | .067 (1.7) | .088 (2.2) |
| | 10 | .072 (1.8) | .068 (1.7) | .061 (1.5) |
| | | | | at 30° Azimuth[b] |
| No. 68 | 4 | .550 (13.97) | [a] | .545 (13.8) |
| | 5 | .390 (9.9) | .423 (8.7) | .425 (10.8) |
| | 6 | .229 (5.8) | .231 (5.9) | .229 (5.8) |
| | 7 | .155 (3.9) | .170 (4.3) | .162 (4.1) |
| | 8 | .144 (3.7) | .147 (3.7) | .132 (3.4) |
| | 9 | .098 (2.5) | .120 (3.6) | .101 (2.6) |
| | 10 | .072 (1.8) | .060 (1.5) | .063 (1.6) |

[a] Not determined

[b] Azimuth angle is defined as the angle measured clockwise about mandrel axis from a zero degree orientation mark placed on the aft adaptor.

Good bond strength was demonstrated by manual attempts to pull the insulator from the Kevlar-epoxy composite; failure was in the composite, not at the insulator to composite bond line. The 90° peel values from subsequent testing are given in the following Table III tabulation:

TABLE III

| Insulator | 90° peel value, psi (kPa) |
|---|---|
| −68 | 8, 12 (55.2, 82.7) |
| −71 | 26, 44 (179.3, 303.4) |

Three samples were tested in an insulator evaluation char motor with conventional EPDM-neoprene-silica insulator samples as the controls. The −71 formulation shows comparable char performance to the conventional formulation as shown in Table IV.

TABLE IV
Char motor 47-char rates, mils/sec (µm/s)

| | Low velocity | Medium velocity |
|---|---|---|
| 7605-71 | 2.3 (58) | 2.5 (64) |
| 7605-68 | 2.8 (71) | — |
| Conventional EPDM-Neoprene-Silica | 2.3 (58) | 2.4 (61) |

The formulation for the elastomer stock in this formulation was as follows in Table V:

9

# EP 0 116 453 B1

## TABLE V

| | Stock 68 parts by wt. | Stock 71 parts by wt. |
|---|---|---|
| Ethylene Propylene Diene Monomer (EPDM) elastomer[1] | 60 | 80 |
| Chloroprene Elastomer[2] | 20 | 20 |
| Styrene butadiene rubber (SBR)[3] | 40 | |
| Trimethylol propane trimethylacrylate[4] | 10 | 10 |
| Tetraethylene glycol methacrylate[5] | 10 | 10 |
| Synthetic polyterpene resin[6] | 10 | 10 |
| $Sb_2O_3$ | | 15 |
| Chlorinated organic flame retardant[7] | | 30 |
| Precipitated, hydrated silica[8] | 47 | 20 |
| Zinc Oxide | 5 | 5 |
| Stearic Acid | 1 | 1 |
| Dicumyl peroxide[9] | 2 | 2 |

[1] Nordel 2522 from E. I. DuPont.
[2] Neoprene FB available from E. I. Dupont.
[3] SBR 1500 from Goodyear.
[4] SR 350 vulcanizer available from Sartomer.
[5] SR 209 vulcanizer from Sartomer.
[6] Wingtack tackifier available from Goodyear.
[7] Dechlorane Plus available from Hooker Chemical and Plastics
[8] HiSil 233 available from PPG Industries.
[9] Varox DCP-40 vulcanizer available from RT Vanderbilt.

Example 2

Following the procedures of Example 1 for applying elastomer to the mandrel, the following formulations in Table VI are employed for the elastomer stock:

10

# EP 0 116 453 B1

## TABLE VI

|  | 69 | 70 |
| --- | --- | --- |
| Ethylene Propylene Diene Monomer (EPDM) elastomer[1] | 80 | 80 |
| Chloroprene Elastomer[2] | 20 | 20 |
| Styrene butadiene rubber (SBR)[3] |  | 15 |
| Isoprene rubber[4] | 15 |  |
| Amine terminated polybutadiene acrylonitrile liquid polymer[5] | 20 |  |
| Trimethylol propane trimethylacrylate[6] |  | 10 |
| Tetraethylene glycol methacrylate[7] |  | 10 |
| Synthetic polyterpene resin[8] | 10 | 10 |
| Precipitated, hydrated silica[9] | 47 | 47 |
| Zinc Oxide | 5 | 5 |
| Stearic Acid | 1 | 1 |
| Dicumyl peroxide[10] | 2 | 2 |

[1, 2, 3, 6, 7, 8, 9] and [10]—See Example 1
[4] Natsyn 2210 from Goodyear Chemicals.
[5] Hycar 1300 from Goodrich.

The resulting liners prepared as in Example 2 are less satisfactory as compared with that obtained in Example 1.

Example 3

Following the procedure of Example 1, two 40 in. (1.02 m) diameter×38 in. (0.96 m) long plaster mandrels with a 13 in. (0.33 m) long cylindrical section were fabricated and coated with FreKote 33 as is representative of mandrels used in building composite rocket motor cases. Adaptors 42, 44 covered with premolded cured insulation 44, 48 following U.S. Army specification MIS-30807 B were attached to the mandrel domes. The surfaces of the adaptors to be bonded to the ribbon 12 were coated with Chemlok[R] adhesive 236A and allowed to dry a minimum of 30 minutes.

Premilled insulator stock formulation 71 of Example 1 was wound onto the mandrel using a modified AMF Model 601 elastomer laying system with standard micro processor control 20 coupled to a specially built rotating stand and provided with a constant length ribbon feed system. The extruder of Example 1 was used. The applicator head was modified as required by trial and error to provide for the required placement and tack of the ribbon. By use of a predetermined program placed in the controller, Mandrel X002 was covered with elastomer within a total elapsed time of about 23 minutes. Mandrel X001 was then covered in a total time of 21 minutes 20 seconds including actual wrapping time of 17 minutes 10 seconds.

A rocket motor case including cylindrical end skirts was fabricated on the uncured elastomeric liner of mandrel X001 and cured in the manner of Example 1. A thermocouple placed between the mandrel and liner stock registered 147°C (296°F) after 10 hours, at which time heating was terminated and the assembly cooled. After mandrel removal, the cured case and liner assembly was subjected to a hydroproof test at a pressure of 35.5 bar (515 psig) without leakage. Thickness of cured elastomer was determined by a nondestructive ultrasonic measurement technique and compared with design. Over 75% of measurement points of the cured liner were within ±0.51 mm (0.020 inch) of design requirement. The data are given in the following tabulation.

11

TABLE VII

As cured insulator thickness[a] (mm (in))

| Gage point station | Design ±0.51 mm (0.020 in) | 0° | 90° | 180° | 270° |
|---|---|---|---|---|---|
| 1 | 13.36 (.526) | NA | NA | NA | NA |
| 2 | 12.72 (.501) | 12.19 (.48) | 12.19 (.48) | 13.46 (.53) | 12.45 (.49) |
| 3 | 11.30 (.445) | 11.43 (.45) | 10.92 (.43) | 11.18 (.44) | 11.18 (.44) |
| 4 | 10.18 (.401) | 10.41 (.41) | 10.16 (.40) | 10.16 (.40) | 10.67 (.42) |
| 5 | 9.45 (.372) | 9.65 (.38) | 9.14 (.36) | 9.14 (.36) | 9.14 (.36) |
| 6 | 9.14 (.360) | 8.64 (.34) | 9.14 (.36) | 8.89 (.35) | 8.64 (.34) |
| 7 | 9.22 (.363) | 8.89 (.35) | 8.64 (.34) | 8.64 (.34) | 8.89 (.35) |
| 8 | 9.58 (.377) | 8.64 (.34) | 9.40 (.37) | 8.64 (.34) | 8.89 (.35) |
| 9 | 10.06 (.396) | 9.91 (.39) | 9.40 (.37) | 9.65 (.38) | 9.91 (.39) |
| 10 | 10.49 (.413) | 10.92 (.43) | 10.16 (.40) | 10.16 (.40) | 11.18 (.44) |
| 11 | 10.90 (.429) | 10.41 (.41) | 10.67 (.42) | 10.67 (.42) | 10.67 (.42) |
| 12 | 11.46 (.451) | 11.43 (.45) | 11.18 (.44) | 10.92 (.43) | 11.18 (.44) |
| 13 | 11.94 (.478) | 12.95 (.51) | 12.95 (.51) | 12.45 (.49) | 12.95 (.51) |
| 14 | 12.88 (.507) | 13.97 (.55) | 13.46 (.53) | 13.46 (.53) | 13.72 (.54) |
| 15 | 13.54 (.533) | 13.72 (.54) | 13.21 (.52) | 13.72 (.54) | 13.97 (.55) |
| 16 | 14.00 (.551) | 13.21 (.52) | 13.21 (.52) | 13.72 (.54) | 13.46 (.53) |
| 17 | 14.22 (.560) | 13.97 (.55) | 13.97 (.55) | 13.72 (.54) | 14.22 (.56) |
| 18 | 14.35 (.565) | 14.22 (.56) | 14.48 (.57) | 13.97 (.55) | 14.22 (.56) |
| 19 | 14.22 (.560) | 14.22 (.56) | 15.00 (.59) | 14.22 (.56) | 14.48 (.57) |
| 20 | 12.75 (.502) | 12.95 (.51) | 12.95 (.51) | 12.70 (.50) | 13.21 (.52) |
| 21 | 11.28 (.444) | 11.43 (.45) | 11.18 (.44) | 11.68 (.46) | 11.94 (.47) |
| 22 | 9.83 (.387) | 9.65 (.38) | 9.14 (.36) | 9.40 (.37) | 9.65 (.38) |
| 23 | 8.36 (.329) | 8.64 (.34) | 8.89 (.35) | 8.89 (.35) | 8.89 (.35) |
| 24 | 6.86 (.271) | 7.97 (.31) | 6.94 (.27) | 8.23 (.32) | 7.20 (.28) |
| 25 | 5.41 (.213) | 5.40 (.21) | 5.66 (.22) | 5.40 (.21) | 5.14 (.20) |
| 26 | 4.57 (.180) | 5.14 (.20) | 4.12 (.16) | 4.37 (.17) | 4.12 (.16) |
| 27 | 5.05 (.199) | 4.89 (.19) | 4.89 (.19) | 5.40 (.21) | 5.40 (.21) |
| 28 | 5.59 (.220) | 6.69 (.26) | 5.92 (.23) | 5.14 (.20) | 4.89 (.19) |
| 29 | 6.12 (.241) | 6.69 (.26) | 6.69 (.26) | 6.69 (.26) | 6.69 (.26) |

12

EP 0 116 453 B1

TABLE VII (Cont.)
As cured insulator thickness[a] (mm (in))

| Gage point station | Design ±0.51 mm (0.020 in) | 0° | 90° | 180° | 270° |
|---|---|---|---|---|---|
| 30 | 6.71 (.264) | 6.69 (.26) | 6.69 (.26) | 6.69 (.26) | 6.69 (.26) |
| 31 | 7.34 (.289) | 6.69 (.26) | 6.94 (.27) | 6.94 (.27) | 6.94 (.27) |
| 32 | 8.00 (.315) | 7.46 (.29) | 6.94 (.27) | 6.69 (.26) | 7.46 (.29) |
| 33 | 8.71 (.343) | 8.64 (.34) | 8.38 (.33) | 8.38 (.33) | 8.64 (.34) |
| 34 | 9.50 (.374) | 8.64 (.34) | 8.89 (.35) | 9.14 (.36) | 8.64 (.34) |
| 35 | 10.39 (.409) | 9.65 (.38) | 10.16 (.40) | 9.65 (.38) | 9.91 (.39) |
| 36 | 11.51 (.453) | 11.18 (.44) | 10.92 (.43) | 10.92 (.43) | 11.68 (.46) |
| 37 | 12.65 (.498) | 12.95 (.51) | 13.46 (.53) | 12.70 (.50) | 13.72 (.54) |
| 38 | 13.56 (.534) | 14.22 (.56) | 14.48 (.57) | 13.97 (.55) | 14.22 (.56) |

Note: Numbers underlined are outside ±0.51 mm (0.020 in.) range.
[a] Comparison of Design Thickness vs Ultrasonic Inspection—X-001

Example 4

The uncured elastomer coated on Mandrel X002 of Example 3 was covered with bleeder cloth and a vacuum bag. The assembly was placed in an autoclave, a vacuum established and then pressure applied to 3.45 bar (50 psig). The vacuum source was then closed and the assembly heated to 163°C (325°F) and held for four hours. After cooldown and removal from the autoclave the vacuum bag and bleeder cloth were removed from the cured elastomer which displayed surface roughness from wrinkling of the vacuum bag. These surface rough spots were ground away. Mechanical measurements were made by difference between the original mandrel dimensions and the cured elastomers outer surface to determine the liner thickness. The data are given in the following tabulation. There was no machining of this demonstration unit to precise dimensional requirements. A rocket motor case duplicating that of Example 3 was then fabricated directly on the cured elastomer covered mandrel, cured in a microwave chamber and the mandrel removed.

TABLE VIII
As cured insulator thickness[a]—X002 (mm (in))

| Station | Cured thickness | | | | Design |
|---|---|---|---|---|---|
| | 0° | 90° | 180° | 270° | |
| 1 | 15.49 (.610) | 15.37 (.605) | 14.15 (.557) | 15.85 (.624) | 13.36 (.526) |
| 2 | 14.02 (.552) | 13.79 (.543) | 13.03 (.513) | 13.84 (.545) | 12.73 (.501) |
| 3 | 11.63 (.458) | 10.92 (.430) | 12.12 (.477) | 11.53 (.454) | 11.30 (.445) |
| 4 | 11.33 (.446) | 11.53 (.454) | 10.64 (.419) | 11.05 (.435) | 10.19 (.401) |
| 5 | 9.93 (.391) | 10.46 (.412) | 9.47 (.373) | 10.13 (.399) | 9.45 (.372) |
| 6 | 9.17 (.361) | 9.25 (.364) | 8.31 (.327) | 9.35 (.368) | 9.14 (.360) |
| 7 | 8.46 (.333) | 8.76 (.345) | 7.87 (.310) | 8.33 (.328) | 9.22 (.363) |
| 8 | 8.61 (.339) | 8.59 (.338) | 8.43 (.332) | 9.02 (.355) | 9.58 (.377) |
| 9 | 10.08 (.397) | 9.83 (.387) | 9.22 (.363) | 10.26 (.404) | 10.06 (.396) |

## EP 0 116 453 B1

TABLE VIII (contd.)
As cured insulator thickness[a]—X002 (mm (in))
Cured thickness

| Station | 0° | 90° | 180° | 270° | Design |
|---|---|---|---|---|---|
| 10 | 10.82 (.426) | 10.57 (.416) | 9.60 (.378) | 10.79 (.425) | 10.49 (.413) |
| 11 | 10.41 (.410) | 10.62 (.418) | 10.13 (.399) | 10.77 (.424) | 10.90 (.429) |
| 12 | 11.38 (.448) | 11.33 (.446) | 11.00 (.433) | 11.76 (.463) | 11.46 (.451) |
| 13 | 14.88 (.586) | 14.88 (.586) | 12.75 (.502) | 13.18 (.519) | 12.14 (.478) |
| 14 | 13.97 (.550) | 13.84 (.545) | 13.67 (.538) | 14.17 (.558) | 12.88 (.507) |
| 15 | 14.68 (.578) | 14.30 (.563) | 14.00 (.551) | 14.45 (.569) | 13.54 (.533) |
| 16 | 14.81 (.583) | 14.38 (.566) | 13.92 (.548) | 14.60 (.575) | 14.00 (.551) |
| 17 | 14.94 (.588) | 14.71 (.579) | 14.38 (.566) | 14.81 (.583) | 14.22 (.560) |
| 18 | 14.50 (.571) | 14.55 (.573) | 14.17 (.558) | 15.06 (.593) | 14.35 (.565) |
| 19 | 15.04 (.592) | 14.27 (.562) | 14.30 (.563) | 14.55 (.573) | 14.22 (.560) |
| 20 | 13.00 (.512) | 12.47 (.491) | 12.55 (.494) | 12.80 (.504) | 12.75 (.502) |
| 21 | 11.89 (.468) | 11.46 (.451) | 11.20 (.441) | 12.22 (.481) | 11.28 (.444) |
| 22 | 10.11 (.398) | 9.91 (.390) | 10.16 (.400) | 10.44 (.411) | 9.83 (.387) |
| 23 | 9.22 (.363) | 8.97 (.353) | 8.84 (.348) | 9.60 (.378) | 8.36 (.329) |
| 24 | 8.05 (.317) | 7.90 (.311) | 7.29 (.287) | 8.51 (.335) | 6.88 (.271) |
| 25 | 5.82 (.229) | 5.41 (.213) | 5.49 (.216) | 6.22 (.245) | 5.41 (.213) |
| 26 | 5.56 (.219) | 5.03 (.198) | 4.22 (.166) | 4.88 (.192) | 4.55 (.180) |
| 27 | 6.93 (.273) | 6.55 (.258) | 6.25 (.246) | 6.50 (.256) | 5.05 (.199) |
| 28 | 6.30 (.248) | 5.84 (.230) | 5.87 (.231) | 6.43 (.253) | 5.59 (.220) |
| 29 | 6.76 (.266) | 6.35 (.250) | 6.73 (.265) | 6.91 (.272) | 6.12 (.241) |
| 30 | 6.43 (.253) | 6.27 (.247) | 6.65 (.262) | 6.86 (.270) | 6.71 (.264) |
| 31 | 6.98 (.275) | 6.73 (.265) | 7.26 (.286) | 7.57 (.298) | 7.34 (.289) |
| 32 | 7.42 (.292) | 7.16 (.282) | 7.62 (.300) | 7.95 (.313) | 8.00 (.315) |
| 33 | 8.28 (.326) | 8.15 (.321) | 8.69 (.342) | 8.69 (.342) | 8.71 (.343) |
| 34 | 8.43 (.332) | 8.23 (.324) | 8.76 (.345) | 8.59 (.338) | 9.50 (.374) |
| 35 | 11.43 (.450) | 10.79 (.425) | 10.06 (.396) | 11.33 (.446) | 10.39 (.409) |
| 36 | 13.79 (.543) | 13.11 (.516) | 14.12 (.556) | 13.92 (.548) | 11.51 (.453) |
| 37 | 15.77 (.621) | 16.05 (.632) | 16.51 (.650) | 15.70 (.618) | 12.65 (.498) |
| 38 | 17.09 (.673) | 17.63 (.694) | 18.01 (.709) | 17.02 (.670) | 13.56 (.534) |

Notes: [a] Thickness by difference using stand-off template gage.

14

Example 5

Following the procedure of Examples 1 and 3 a flight weight rocket motor insulator was fabricated on a 40 in. (1.02 m) diameter plaster mandrel using the apparatus depicted in Figure 1.

Two grooves are molded circumferentially around the mandrel cylinder; one is located near the center of the cylinder and the second near the aft end of the cylinder. The grooves are 3 in. (7.62 cm) wide and were deepened to 0.1 in. (2.54 mm). Extruded strips of the insulator stock were hand layed into these grooves until flush with the mandrel cylinder surface; then the rubber in the groves was covered with teflon tape. These strips are companion samples which served as a source of test samples after mandrel removal.

Next the plaster mandrel was covered with an approximate 0.005 in. (0.127 mm) layer of teflon adhesive backed tape to permit ready removal of trial applications of the uncured rubber stock. The teflon tape was left in place for the fabrication of this example.

Premilled insulator stock used was that of formulation 125 given in Table IX.

The insulator stock was automatically applied to the required thickness using four predetermined programs. These programs covered in sequence the aft dome region, the aft cylinder region, the forward dome region, and the forward cylinder region. Total winding time was 50 minutes. Application thickness was 5% over nominal to allow for shrinkage of the elastomer.

The applied thickness was determined by the difference between mechanical measurements made of the mandrel before and after application of the elastomer.

The mandrel covered with uncured insulator stock was placed in a filament winding machine and a standard case wound over the insulator stock. The unit on a rotating cure dolly was placed in an oven and exposed for 2 hours, to 175°F (79.4°C), then the temperature was raised to 320°F (160°C) for an additional 11 hours at which time heating was terminated and the assembly cooled.

After mandrel removal the thickness of the cured elastomer was determined by the ultrasonic technique of Example 3 and the data compared to the uncured elastomer at 40 locations along eight azimuths. Average shrinkage of the elastomer was determined to be 1.7%. After correcting the 5% overwind for the approximate 2% shrinkage, over 75% of the measurement points of the cured elastomer were within the design tolerance of the insulator.

The insulated case was subjected to high energy X-ray examination. No significant anomalies were found in the thicker dome sections. Slight separations between cured case and insulator were indicated by the X-ray in the very thin (0.040 in. (1.02 mm)) region of the cylindrical section. This is related to overlap at the edges of the single layer of ribbon during winding in this section. One such region was suspect as a possible leak path and was patched by bonding a 7 in. (17.8 cm) wide by 0.050 in. (1.27 mm) thick band of cured rubber circumferentially around the suspect region. Additionally patches were placed over the clipped ends of experimental thermocouple leads which had been brought thru the insulator along the bond line between the forward adaptor premold (42) and the elastomer layer (40) similarly to those of Example 1.

The physical properties in the 125 insulator stock from the insulator of this example are compared with laboratory data in Table X. Also shown is the comparative insulator char performance to that of the standard rocket motor insulator (B in Table X). Table XI gives the Short A hardness values of the insulator taken from throughout the rocket motor case of this example all indicating acceptable cure of the elastomer.

The case was subjected to standard hydroproof pressure of 1350 psi (9.308 MPa) and held for 60 seconds. Visual examination of the proofed case showed no apparent damage at any location. Sample strain gage readings were all below the maximum strain level associated with the case. There was evidence of surface weeping circumferentially on the forward dome for a distance of about three to four inches (7.62—10.16 cm) outward from the forward metal adaptor. Later examination shows this is attributable to the inadequate patching of the thermocouple leads. No such weeping was evident at any other location.

The case was reproofed to 1350 psi (9.308 MPa) for an additional 60 seconds and then the pressure was raised rapidly until burst occurred at 1500 psi (10.34 MPa) in the aft dome, the weakest portion of the case.

TABLE IX
Stock 125

| | Parts by weight |
|---|---|
| Ethylene Propylene Diene Monomer (EPDM) elastomer[1] | 80 |
| Chloroprene Elastomer[2] | 20 |
| Trimethylol propane trimethylacrylate[4] | 12 |
| Tetraethylene glycol methacrylate[5] | 10 |
| Synthetic polyterpene resin[6] | 10 |
| Triallyl trimelletate[10] | 3 |
| Silica | 45 |
| Zinc Oxide | 5 |
| Stearic Acid | 1 |
| 1,1-Bis(t-butylperoxy) substituted cyclohexane[9] | 7.5 |

[1, 2, 4, 5, and 6] see Example 1.
[9] Trigonox 29/40 available from Noury Chemical.
[10] TATM from Natrochem, Inc.

TABLE X
Physical properties of insulator (7605-125)

| Property | Lab. press cure | | Example 5 |
|---|---|---|---|
| | @20 psi (138 kPa) | @100 psi (689 kPa) | |
| Tensile (Av). psi | 1388 (9570 kPa) | 1490 (10273 kPa) | 1485[a] (10239 kPa) |
| Elongation (AV) % | 370 | 380 | 448[a] |
| Tensile Stress @ 100% | 477 | 490 | — |
| @ 300% | 1133 | 1170 | — |
| Density (g/cm$^3$) | 1.15 | 1.15 | 1.12[a] |
| Shrinkage | — | 2.25% | 1.7% |
| Hardness, Shore A, −125 | 78 | 77 | 76/75/79 FWD/CYL/AFT |
| B | — | 64—75C | 68 |
| CHAR RATIO TO B (Med. Velocity) | | 0.94 | |

[a] Companion sample placed in splice ring groove.
[b] Premolded insulator on adaptors.
[c] Specification.

# EP 0 116 453 B1

### TABLE XI
### Azimuth

| Location | Station | 0° | 45° | 90° | 135° | 180° | 225° | 270° | 315° | AV. |
|---|---|---|---|---|---|---|---|---|---|---|
| Fwd. Premold[a] | 1 | 65 | 66 | 65 | 68 | 69 | 67 | 69 | 72 | 67.6 |
| Fwd. Dome | 5 | 68 | 76 | 70 | 75 | 77 | 74 | 78 | 79 | 74.6 |
| | 12 | 72 | 76 | 74 | 77 | 77 | 76 | 74 | 79 | 75.6 |
| | 15 | 72 | 73 | 70 | 70 | 79 | 75 | 79 | 80 | 74.8 |
| | 20 | 72 | 78 | 74 | 77 | 76 | 78 | 75 | 78 | 76.0 |
| | 22 | 75 | 75 | 75 | 75 | 78 | 78 | 76 | 78 | 76.3 |
| | 25 | 72 | 79 | 80 | 77 | 81 | 80 | 80 | 77 | 78.3 |
| | | | | | | | | | | 78.8 |
| Cyl. | 26 | 68 | 78 | 75 | 66 | 77 | 82 | 82 | 75 | 75.4 |
| | 28 | 80 | 65 | 78 | 70 | 74 | 78 | 78 | 80 | 75.4 |
| | 30 | 75 | 65 | 74 | 69 | 77 | 76 | 76 | 78 | 73.8 |
| | | | | | | | | | | 74.8 |
| Aft Dome | 31 | 80 | 78 | 78 | 80 | 76 | 79 | 82 | 79 | 79.0 |
| | 34 | 80 | 80 | 80 | 80 | 80 | 79 | 80 | 76 | 79.4 |
| | 40 | 76 | 76 | 79 | 79 | 80 | 77 | 78 | 79 | 78.0 |
| | 45 | 79 | 79 | 80 | 76 | 76 | 77 | 79 | 75 | 77.6 |
| | | | | | | | | | | 78.5 |
| Aft Premold[a] | 47 | 66 | 67 | 66 | 68 | 68 | 69 | 68 | 69 | 67.6 |

[a] Premold is standard Insulator Material.

## Claims

1. A method of making a rocket motor case or portion thereof, which method comprises: forming a layer (40) of elastomer on a mandrel (14) having a centre rotational axis (30); applying a shell comprising filaments and thermosettable resin to said layer (40) of said elastomer; and curing said thermosettable resin to provide said case or portion of said case, characterised by forming the layer (40) of elastomer by causing a thin, tacky ribbon (12) comprising a curable elastomer to continuously so encircle a center rotational axis (30) of a mandrel (14) as to adjacently position and tack together integral segments (54—68) of said ribbon (12) substantially circumferentially relative to said center axis (30) forming a layer (40) of said elastomer comprising a plurality of said segments (54—68) layed on each other in precise fashion about said mandrel (14) along said center rotational axis (30) and further characterised by

(a) selecting for said curable elastomer a silica filled, crosslinkable EPDM elastomer containing

(i) a plasticizer consisting essentially of unsaturated plasticizing oil that is liquid at 25°C and selected from compounds having two or more carbon-carbon double bonds and

(ii) peroxide curative wherein there are between 2 and 30 parts by weight of said plasticizing oil per hundred parts by weight of crosslinkable elastomer polymer or polymers, said silica filled elastomer polymer having a Mooney Viscosity between 10 and 65 (212°F (100°C) (ML-4),

(b) extruding said silica filled, crosslinkable EPDM elastomer to provide an extruded ribbon product (12) having a temperature in the range between 32.2°C (90°F) and 85°C (185°F),

(c) applying said extruded ribbon product (12) to said mandrel (14) at a temperature in the range

17

between 26.7°C (80°F) and 65.6°C (150°F), thereby assisting in precisely tacking together said integral segments (54—68) layed upon each other and

(d) curing said extruded ribbon product (12) applied to said mandrel (14) at a temperature in the range between 93.3°C (200°F) and 204.4°C (400°F) to yield the elastomer liner having a density of between 1.0 and 1.2 grams per cubic centimeter.

2. A method in accordance with claim 1, characterised in that said filled crosslinkable elastomer contains silica and antimony oxide.

3. A method in accordance with claim 1 or 2, characterised in that said filled crosslinkable elastomer contains between 20 and 150 parts by weight of said filler per 100 parts by weight of said elastomer polymer.

4. A method in accordance with claim 1, 2 or 3, wherein the layer (40) of said elastomer comprises a plurality of said integral segments (54—68) layed upon each other and the shell comprises thermosettable resin and continuous filaments, characterised by applying the shell to said layer (40) by winding said filaments around said mandrel (14) on said layer (40); partially curing said resin; and curing said elastomer and partially cured resin resulting in integrated layers of cured elastomer and filaments in a thermoset resin matrix.

5. A method according to any of claims 1 to 3, characterised in that the layer of elastomer is uncured when the shell is applied.

6. A method according to any of claims 1 to 3, characterised in that the layer of elastomer is cured when the shell is applied.

**Patentansprüche**

1. Verfahren zur Herstellung eines Raketenmotorgehäuses oder Teiles davon, wobei das Verfahren umfaßt: Bilden einer Elastomerschicht (40) auf einem Formkern (14) mit einer zentralen Rotationsachse (30), Aufbringen einer Fasern und wärmehärtbares Harz umfassenden Ummantelung auf diese Elastomerschicht (40) und Härten des hitzehärtbaren Harzes um das Gehäuse oder Teil dieses Gehäuses zur Verfügung zu stellen, gekennzeichnet durch Bildung der Elastomerschicht (40) wobei ein dünnes, ziehfestes Band (12) umfassend ein härtbares Elastomer zur kontinuierlichen Umschlingung einer zentralen Rotationsachse (30) eines Formkernes (14) veranlaßt wird zur benachbarten Anordnung und Aneinanderhaftung, wobei integrale Segmente (54—68) dieses Bandes (12) im wesentlichen dem Umfang entsprechend im Verhältnis zu der zentralen Achse (30) eine Elastomerschicht (40) bilden umfassend eine Vielzahl dieser Segmente (54—68) die in präziser Form aneinander um den Formkern (14) entlang der zentralen Rotationsachse (30) gelegt werden und weiterhin gekennzeichnet durch

a) Auswählen für das härtbare Elastomer eines Siliziumdioxid gefüllten vernetzbaren EPDM Elastomers enthaltend

(i) einen Weichmacher, im wesentlichen bestehend aus ungesättigtem Weichmacheröl, das bei 25°C flüssig ist und ausgewählt ist aus Verbindungen, die zwei oder mehr Kohlenstoff-Kohlenstoff-Doppelbindungen haben und

(ii) Peroxidhärter worin zwischen 2 und 30 Gewichtsteile des Weichmacheröles pro 100 Gewichtsteile des vernetzbaren Elastomer-Polymers oder -Polymere sind, wobei das Siliziumdioxid gefüllte Elastomer- Polymer eine Mooney-Viskosität zwischen 10 und 65 hat (212°F (100°C) ML-4),

b) Extrudieren des Siliziumdioxid gefüllten quervernetzbaren EPDM Elastomers um ein extrudiertes Bandprodukt (12) mit einer Temperatur im Bereich zwischen 32,2°C (90°F) und 85°C (185°F) zur Verfügung zu stellen,

c) Aufbringen des extrudierten Bandproduktes (12) auf den Formkern (14) bei einer Temperatur in dem Bereich zwischen 26,7°C (80°F) und 65,6°C (150°F), wobei Unterstützung beim präzisen Aneinanderheften der integralen Segmente (54—68), die übereinander verlegt werden, erfolgt und

d) Härten des extrudierten Bandproduktes (12), das auf den Formkern (14) bei einer Temperatur im Bereich zwischen 93,3°C (200°F) und 204,4°C (400°F) aufgebracht wurde, um die Elastomerzwischenlage mit einer Dichte von zwischen 1,0 und 1,2 Gramm pro Kubikzentimeter zu erhalten.

2. Verfahren nach Anspruch 1, dadurch gekennzeichnet, daß das gefüllte vernetzbare Elastomer Siliziumdioxid und Antimonoxid enthält.

3. Verfahren nach Anspruch 1 oder 2, dadurch gekennzeichnet, daß das gefüllte vernetzbare Elastomer zwischen 20 und 150 Gewichtsteile des Füllmittels pro 100 Gewichtsteile des Elastomer-Polymers enthält.

4. Verfahren nach Anspruch 1, 2 oder 3, worin die Schicht (40) des Elastomers eine Vielzahl von aufeinandergelegten integralen Segmenten (54—68) umfaßt und die Ummantelung wärmehärtbares Harz und fortlaufende Fasern umfaßt, gekennzeichnet durch Aufbringung der Ummantelung auf die Schicht (40) durch Wickeln der Fasern um den Formkörper (14) auf der Schicht (40), teilweises Härten des Harzes und Härten des Elastomers und teilweise gehärteten Harzes, resultierend in integrierten Schichten von gehärtetem Elastomer und Fasern in einer wärmegehärteten Harzmatrix.

5. Verfahren nach einem der Ansprüche 1 bis 3, dadurch gekennzeichnet, daß die Schicht des Elastomers ungehärtet ist, wenn die Ummantelung aufgebracht wird.

6. Verfahren nach einem der Ansprüche 1 bis 3, dadurch gekennzeichnet, daß die Schicht des Elastomers gehärtet ist, wenn die Ummantelung aufgebracht wird.

**EP 0 116 453 B1**

**Revendications**

1. Procédé de fabrication d'une enveloppe de moteurfusée ou d'une partie de celle-ci, comprenant les opérations consistant à former une couche (40) d'élastomère sur un mandrin (14) qui présente un axe de rotation central (30), à appliquer un revêtement composé de filaments et de résine thermodurcissable sur ladite couche (40) d'élastomère et à faire durcir cette résine thermodurcissable pour former ladite enveloppe ou la partie de ladite enveloppe, caractérisé en ce qu'on forme la couche (40) d'élastomère en enroulant de façon continue un ruban adhésif mince (12), composé d'un élastomère durcissable, autour de l'axe de rotation central (30) du mandrin (14) de manière à placer côte à côte et à coller ensemble des segments d'un seul tenant (54—68) dudit ruban (12) dans une disposition sensiblement circonférentielle par rapport audit axe central (30), pour former une couche (40) dudit élastomère composée d'une multiplicité desdits segments (54—68) posés l'un sur l'autre de façon précise autour dudit mandrin (14) le long dudit axe de rotation central, et caractérisé en outre par les opérations consistant

(a) à choisir, pour ledit élastomère durcissable, un élastomère EPDM réticulable chargé de silice, contenant

(i) un plastifiant constitué essentiellement par une huile plastifiante insaturée qui est liquide à 25°C et qui est choisie parmi des composés comportant deux ou plusieurs doubles liaisons carbone-carbone et

(ii) un agent de durcissement peroxydé, ladite huile plastifiante étant présente à raison de 2 à 30 parties en poids pour 100 parties en poids de polymère ou de polymères élastomère(s) réticulable(s), ledit polymère élastomère chargé de silice ayant une viscosité Mooney comprise entre 10 et 65 (100°C (212°F), ML-4),

(b) à extruder ledit élastomère EPDM réticulable chargé de silice pour former un produit extrudé en ruban (12) ayant une température dans la gamme comprise entre 32,2°C (90°F) et 85°C (185°F),

(c) à appliquer ledit produit extrudé en ruban (12) sur ledit mandrin (14) à une température dans la gamme de 26,7°C (80°F) à 65,6°C (150°F), de façon à favoriser le collage mutuel précis desdits segments d'un seul tenant (54—68) posés l'un sur l'autre, et

(d) à faire durcir ledit produit extrudé en ruban (12) appliqué sur ledit mandrin (14) à une température dans la gamme entre 93,3°C (200°F) et 204,4°C (400°F), pour obtenir la chemise d'élastomère ayant une masse volumique comprise entre 1,0 et 1,2 $g/cm^3$.

2. Procédé selon la revendication 1, caractérisé en ce que ledit élastomère réticulable chargé contient de la silice et de l'oxyde d'antimoine.

3. Procédé selon la revendication 1 ou 2, caractérisé en ce que ledit élastomère réticulable chargé contient entre 20 et 150 parties en poids de ladite charge pour 100 parties en poids dudit polymère élastomère.

4. Procédé selon l'une quelconque des revendications 1 à 3, dans lequel la couche (40) dudit élastomère est constituée par une multiplicité desdits segments d'un seul tenant (54—68) posés l'un sur l'autre et le revêtement se compose de résine thermodurcissable et de filaments continus, caractérisé par les opérations consistant à appliquer le revêtement sur ladite couche (40) en enroulant lesdits filaments autour dudit mandrin (14) sur ladite couche (40), à faire durcir partiellement ladite résine et à faire durcir ledit élastomère et la résine partiellement durcie pour obtenir des couches intégrées d'élastomère durci et de filaments dans une matrice de résine thermodurcie.

5. Procédé selon l'une quelconque des revendications 1 à 3, caractérisé en ce que la couche d'élastomère est non durcie au moment où le revêtement est appliqué.

6. Procédé selon l'une quelconque des revendications 1 à 3, caractérisé en ce que la couche d'élastomère est durcie au moment où le revêtement est appliqué.

19

FIG. I

FIG. 2

FIG. 3

FIG. 4

FIG. 5